# EUROPEAN PATENT SPECIFICATION

(11) **EP 3 258 202 B1**
(45) Date of publication and mention of the grant of the patent: **01.05.2019**
(21) Application number: 16749174.5
(22) Date of filing: 05.02.2016
(51) Int. Cl.: F28D 1/053, B23P 21/00, F28F 9/02, B23P 15/26, F28F 9/14

(54) **HEAT EXCHANGER, HEAT EXCHANGER ASSEMBLING APPARATUS AND HEAT EXCHANGER ASSEMBLING METHOD**
WÄRMETAUSCHER, WÄRMETAUSCHERMONTAGEVORRICHTUNG UND WÄRMETAUSCHERMONTAGEVERFAHREN
ÉCHANGEUR DE CHALEUR, DISPOSITIF D'ASSEMBLAGE D'ÉCHANGEUR DE CHALEUR ET PROCÉDÉ D'ASSEMBLAGE ÉCHANGEUR DE CHALEUR

(30) Priority: 12.02.2015 JP 2015025527; 20.01.2016 JP 2016008445
(43) Date of publication of application: 20.12.2017
(73) Proprietor: Calsonic Kansei Corporation, Saitama-shi, Saitama 331-8501 (JP)
(72) Inventor: KATOU, Hiroki, Saitama-shi Saitama 331-8501 (JP); SHINOHARA, Yasuyuki, Saitama-shi Saitama 331-8501 (JP)
(74) Representative: Grünecker Patent- und Rechtsanwälte PartG mbB
(86) International application number: PCT/JP2016/053555
(87) International publication number: WO 2016/129530

(56) References cited:
- WO-A1-2004/083763
- JP-A- H04 354 631
- JP-A- 2002 206 884
- JP-A- 2014 237 186
- JP-U- H0 235 630
- JP-U- H02 139 035

## Description

### TECHNICAL FIELD

The present invention relates to a heat exchanger, a heat exchanger assembling apparatus, and a heat exchanger assembling method.

### BACKGROUND ART

A heat exchanger used for a radiator or the like of an automotive vehicle includes a plurality of tubes and fins, which are laminated, and a pair of tanks connected to opening ends of respective tubes. Automatically assembling this type of heat exchanger requires holding each laminated tube at a predetermined position.

As discussed in JP02-035630U, there is an assembling apparatus for a heat exchanger core including a compression claw for alternately laminating and arranging a plurality of tubes and fins on a set plate and compressing each of the tubes and fins in a laminate direction.

As discussed in JP61-025734A, there is a plate assembling apparatus for a heat exchanger core that alternately laminates and arranges a plurality of tubes and fins on a table, compresses respective tubes and fins in the laminate direction in a state where the tubes and fins are sandwiched between an upper guide plate and a lower guide plate from above and bottom, and inserts an opening end of each tube into a hole of a side plate (tank).

However, according to the apparatuses discussed in JP02-035630U and JP61-025734A, positional deviation occurs in each of the tubes laminated on the table or the like, and therefore accurately performing the assembling operation including inserting the opening end of each tube into the hole of the tank was difficult.

WO 2004/083763 A1 discloses a heat exchanger, a heat exchanger assembling apparatus, and a heat exchanger assembling method according to the preamble of the independent claims of the present invention.

### SUMMARY OF INVENTION

The object of the present invention is to provide a heat exchanger, a heat exchanger assembling apparatus, and a heat exchanger assembling method, in which assembling each of the laminated tubes with the tank can be accurately performed. This object is solved by the features of the independent claims. Preferred embodiments are laid down in the dependent claims.

### BRIEF DESCRIPTION OF DRAWINGS

FIG. 1 is a front view illustrating a schematic configuration of a heat exchanger core according to an embodiment of the present invention;
FIG. 2A illustrates a process for assembling the heat exchanger core;
FIG. 2B illustrates a process for assembling the heat exchanger core;
FIG. 2C illustrates a process for assembling the heat exchanger core;
FIG. 2D illustrates a process for assembling the heat exchanger core;
FIG. 3A is a configuration diagram illustrating an operation of an assembling apparatus in a lamination process;
FIG. 3B is a configuration diagram illustrating an operation of the assembling apparatus in a main compression process;
FIG. 3C is a configuration diagram illustrating an operation of the assembling apparatus in an assembling process;
FIG. 4A is a configuration diagram illustrating an operation of the assembling apparatus in the lamination process;
FIG. 4B is a configuration diagram illustrating an operation of the assembling apparatus in the main compression process;
FIG. 4C is a configuration diagram illustrating an operation of the assembling apparatus in the assembling process;
FIG. 5A is a cross-sectional view of the tubes illustrating an operation of the assembling apparatus in the lamination process;
FIG. 5B is a cross-sectional view of the tubes illustrating an operation of the assembling apparatus in the main compression process;
FIG. 5C is a cross-sectional view of the tubes illustrating an operation of the assembling apparatus in the assembling process;
FIG. 6 is a front view illustrating a modified embodiment of the heat exchanger core; and
FIG. 7 is a configuration diagram illustrating an operation of an assembling apparatus according to a comparative example.

### DESCRIPTION OF EMBODIMENTS

Hereinafter, embodiments of the present invention will be described with reference to attached drawings.

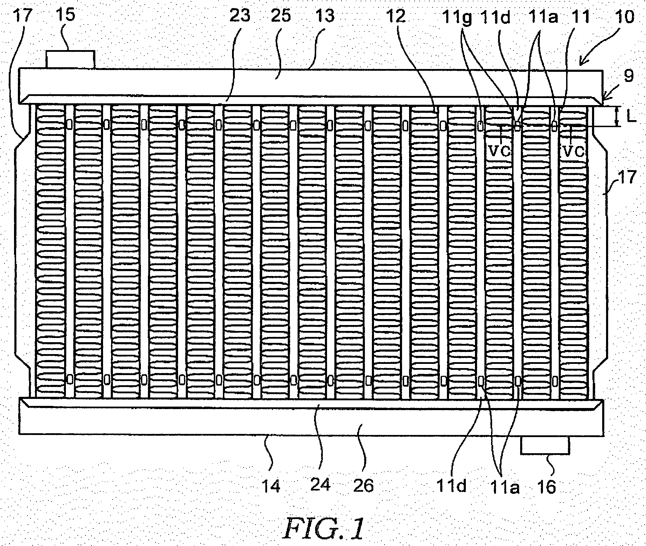

FIG. 1 is a front view illustrating a schematic configuration of a heat exchanger 10 according to an embodiment of the present invention.

The heat exchanger 10 performs heat exchange between a medium flowing inside thereof and external air or the like. The heat exchanger 10 can be used as a radiator for an internal combustion engine, in which cooling liquid flows as the internal medium. However, the heat exchanger 10 is not limited to the radiator and adoptable as a charge air cooler in which intake air flows as a medium or a condenser of an air conditioner or a cooling device in which a refrigerant gas flows as a medium.

The heat exchanger 10 includes a plurality of tubes 11 in which the internal medium flows, corrugated fins 12 arranged alternately with respective tubes 11, right and left reinforcements 17 disposed in such a way as to be aligned with both ends of a laminate body of respective tubes 11 and fins 12, and upper and lower tanks 13 and 14 to which opening ends 11d of respective tubes 11 are connected.

The flat tube 11 can be formed by bending a metal plate, such as an aluminum plate, into a cylindrical shape. However, the tube 11 is not limited to a specific type and may be formed by extruding a molten metal material into a cylindrical shape.

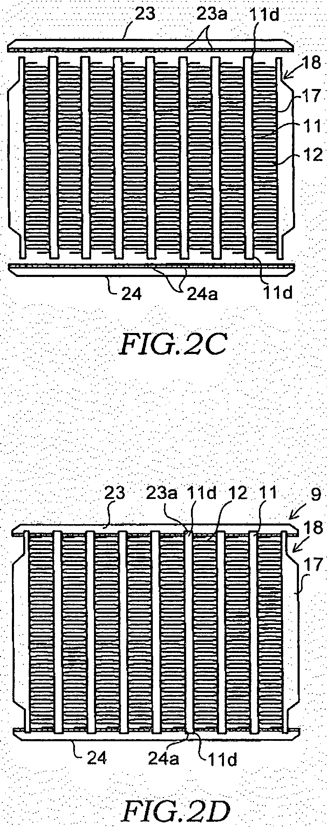

The tanks 13 and 14 include tank plates 23 and 24 to which opening ends 11d of respective tubes 11 are connected and dome-shaped tank bodies 25 and 26 assembled with the tank plates 23 and 24. The tank plates 23 and 24 have tube insertion holes 23a and 24a into which the opening ends 11d of respective tubes 11 are inserted (refer to FIG. 2D). The tank plates 23 and 24 are, for example, made of a metal member such as an aluminum. The tank bodies 25 and 26 are, for example, made of a resin member.

The manufacturing of the heat exchanger 10 includes assembling the tubes 11, the fins 12, the reinforcements 17, and the tank plates 23 and 24 by using an assembling apparatus 50 described below, constituting the heat exchanger core 9 by brazing the assembled members for joining them, and completing the heat exchanger 10 by assembling the heat exchanger core 9 with the tank bodies 25 and 26.

While the heat exchanger 10 is operating, the medium is supplied into the tank 13 from a medium inlet 15 of the tank body 25. The medium flows into each tube 11 from the tank 13 and subsequently into the tank 14, and is then discharged from a medium outlet 16 of the tank body 26. Thus, the medium circulating in the heat exchanger 10 exchanges heat with the air via the fins 12 while flowing through respective tubes 11.

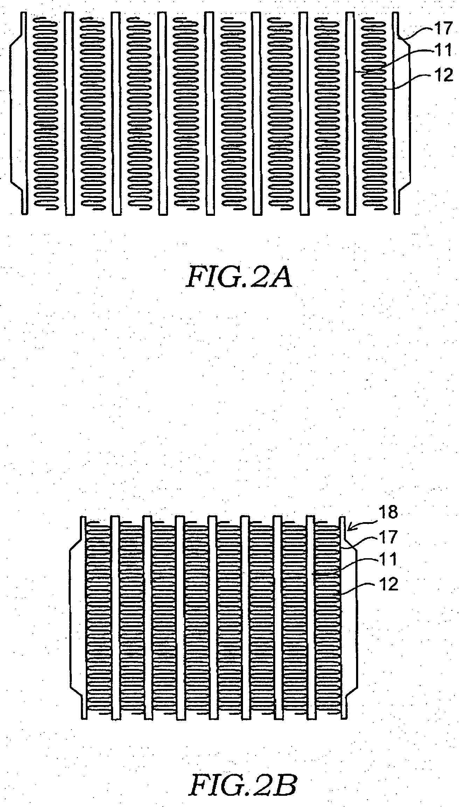

FIGS. 2A to 2D illustrate assembling processes of the heat exchanger core 9. Hereinafter, exemplary processes of assembling the heat exchanger core 9 will be described.

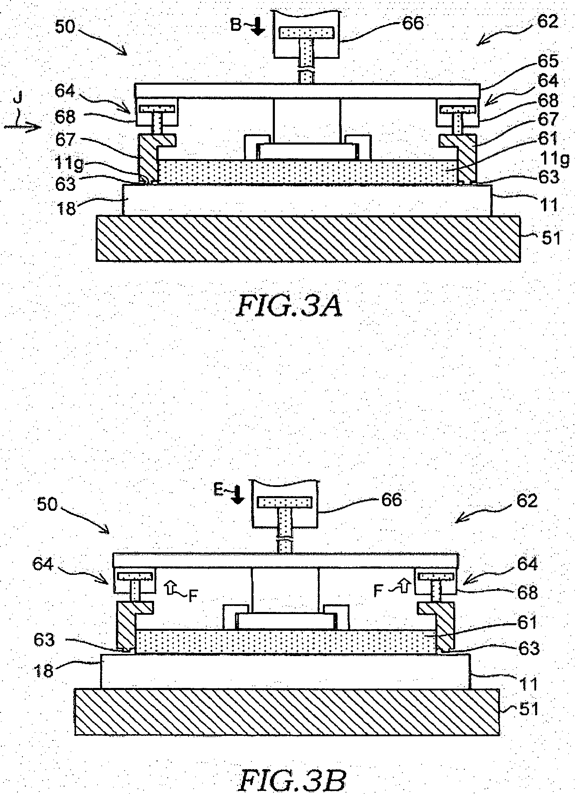

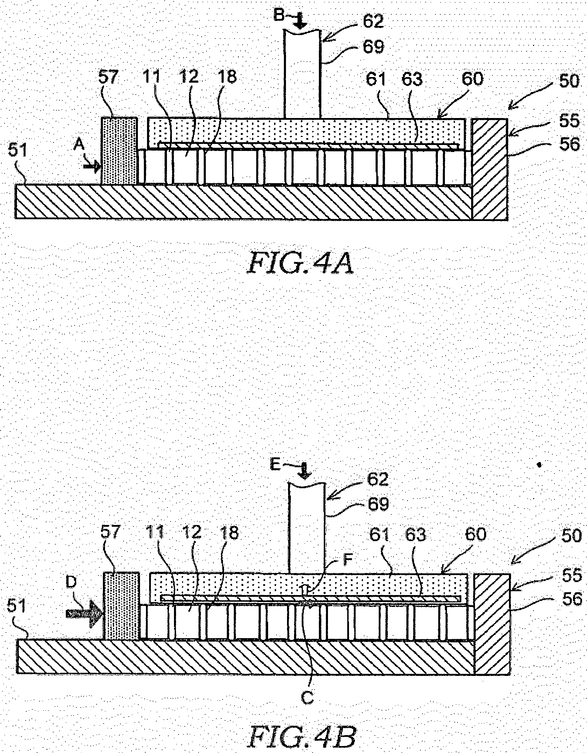

First, alternately laminating a plurality of tubes 11 and fins 12 (refer to FIG. 2A) is performed. Subsequently, compressing the laminated tubes 11 and fins 12 in the laminate direction (refer to FIG. 2B) by using the assembling apparatus 50 (refer to FIGS. 3A to 3C and FIGS. 4A to 4C) is performed. In this state, each fin 12 is hermetically in contact with neighboring tubes 11. In the following description, a predetermined number of tubes 11 and fins 12 laminated alternately with each other is referred to as "laminate body 18". Further, the "laminate direction" is the direction along which the tubes 11 and the fins 12 are aligned.

The assembling apparatus 50 compresses the laminate body 18 constituted by the tubes 11 and the fins 12 until the interval between two tubes 11 neighboring in the laminate direction becomes equal to a predetermined interval. The predetermined interval is the interval between the tube insertion holes 23a and 24a of respective tank plates 23 and 24 (refer to FIG. 2C). In the following description, the interval between two neighboring tubes 11 is referred to as "tube pitch".

Press-fitting the opening ends 11d of respective tubes 11 into corresponding tube insertion holes 23a and 24a of the tank plates 23 and 24 (refer to FIG. 2D) is performed in the compressed state where the tube pitch of the laminate body 18 is equal to the predetermined interval.

Subsequently, joining the constituent members by brazing is performed through heat treatment causing cladding layers applied to the surfaces of the tubes 11, the fins 12, and the tank plates 23 and 24 to melt. As a result, the tubes 11, the fins 12, the reinforcements 17, and the tank plates 23 and 24 are united to form the heat exchanger core 9.

FIGS. 3A to 3C are schematic configuration diagrams illustrating the assembling apparatus 50. FIGS. 4A to 4C are schematic configuration diagrams illustrating the assembling apparatus 50 seen from the direction of arrow J illustrated in FIG. 3A. An exemplary configuration of the assembling apparatus 50 will be described in detail below.

The assembling apparatus 50 includes a table 51, a laminate-direction compressing unit 55, a thickness-direction compressing unit 60, and a tank assembling unit (not illustrated).

The table 51 has a planer portion on which the laminate body 18 constituted by tubes 11 and fins 12, which are constituent components of the heat exchanger 10, is placed.

The laminate-direction compressing unit 55 is a mechanism which of compresses the laminate body 18 placed on the table 51 in the laminate direction. The laminate-direction compressing unit 55 includes a fixing portion 56 fixed to the table 51, a movable portion 57 supported by the table 51 so as to be movable in the laminate direction, and an actuator (not illustrated) that can move the movable portion 57.

The thickness-direction compressing unit 60 is a mechanism which compresses the laminate body 18 in a thickness direction perpendicular to the table 51. The thickness-direction compressing unit 60 includes a leveling plate 61 that can be moved by a driving mechanism 62 in the thickness direction, and a pair of holding portions 63 that can be moved by a driving mechanism 64 in the thickness direction. In the following description, the "thickness direction" is the direction perpendicular to the surface of the table 51 on which the laminate body 18 is placed.

The driving mechanism 62 of the leveling plate 61 includes a guide rod 69 (refer to FIGS. 4A to 4C) that supports the leveling plate 61 so as to be movable in the vertical direction, a support base 65, and an actuator 66 that raises or lowers the support base 65 to move the leveling plate 61. For example, a hydraulic cylinder is adoptable as the actuator 66.

The leveling plate 61 has a planer portion, which extends parallel to the table 51, to press each tube 11 placed on the table 51.

The driving mechanisms 64 of the holding portions 63 include a pair of guide portions 67 each supporting the corresponding holding portion 63 so as to be movable in the vertical direction with respect to the support base 65, and a pair of actuators 68 for raising and lowering corresponding guide portions 67 to move the holding portions 63. For example, a hydraulic cylinder is adoptable as the actuator 68.

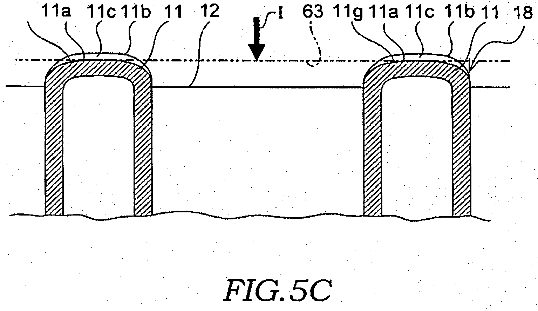

The holding portion 63 is a convex portion protruding from each guide portion 67 and pressing each tube 11. Each tube 11 has a pressing portion 11g, against which the holding portion 63 is pressed, in the vicinity of the opening end 11d. As illustrated FIG. 5C described below, the pressing portion 11g has a concave portion 11a (i.e., pressed mark), which is formed as a recess on a surface 11b of the tube 11 when the holding portion 63 is pressed against the tube 11.

Respective holding portions 63 are arranged with the table 51 sandwiched in the longitudinal direction of the tube 11 and extend parallel to both ends of the table 51. Each holding portion 63 is disposed in such a way as to face a predetermined position of each tube 11 placed on the table 51. As illustrated FIG. 1, the pressing portion 11g provided on the tube 11 is spaced from the tank plates 23 and 24 by a predetermined distance L.

The holding portion 63 is formed integrally with the guide portion 67, although the holding portion 63 can be formed separately of the guide portion 67.

The leveling plate 61 and each holding portion 63 are, for example, made of a metal member such as an iron, whose hardness is higher than that of the tube 11. The area where the leveling plate 61 comes into contact with respective tubes 11 is set to be greater than the area where respective holding portions 63 come into contact with respective tubes 11. Such a configuration can prevent any plastic deformation from occurring on the tube 11 at a portion where the leveling plate 61 is pressed.

Exemplary operations of the assembling apparatus 50 will be described in detail below with reference to FIGS. 3A to 3C, FIGS. 4A to 4C, and FIGS. 5A to 5C. FIG. 5C corresponds to a cross-sectional view of the tube 11 taken along a line VC-VC illustrated in FIG. 1.

First, the assembling apparatus 50 performs the lamination process for laminating the laminate body 18 on the table 51 at a predetermined position thereof (refer to FIG. 3A, FIG. 4A, and FIG. 5A).

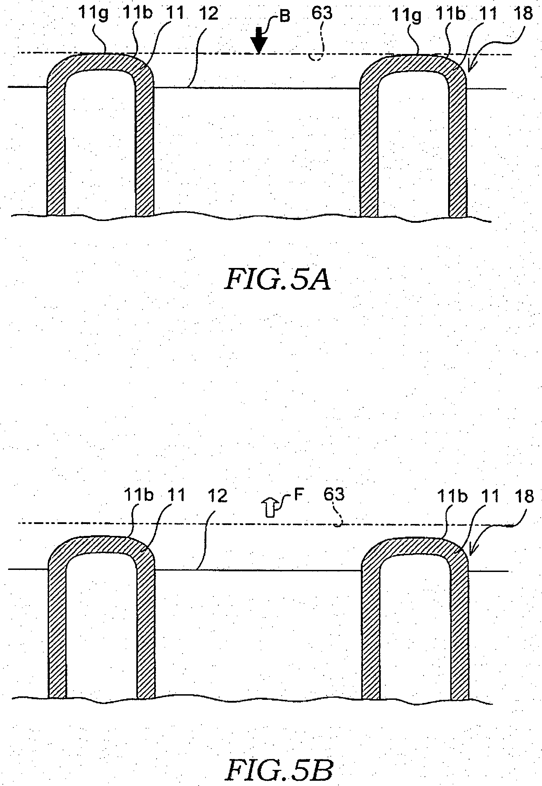

The lamination process includes placing the laminate body 18 constituted by a predetermined number of tubes 11 and fins 12 arranged respectively on the table 51, and causing the driving mechanism 62 of the thickness-direction compressing unit 60 to lower the support base 65 toward the table 51 so that the laminate body 18 is pressed in the thickness direction by the leveling plate 61 and each holding portion 63 with a driving force B (refer to FIG. 3A). Each holding portion 63 is held at a position on the same plane (on the horizontal plane) as the leveling plate 61 and presses the laminate body 18 together with the leveling plate 61. In this case, no plastic deformation occurs in the pressing portion 11g of the tube 11 pressed by each holding portion 63 (refer to FIG. 5A). However, the configuration is not limited to the above-mentioned example. The lamination process may include moving the holding portion 63 upward away from the laminate body 18 and pressing the laminate body 18 by only the leveling plate 61.

The lamination process includes causing the laminate-direction compressing unit 55 to move the movable portion 57 toward the fixing portion 56 to compress the laminate body 18 with a driving force A in the laminate direction (refer to FIG. 4A). The compression by the laminate-direction compressing unit 55 in the lamination process continues until the tube pitch reaches, for example, 90% of the above-mentioned predetermined interval.

The driving force B required for the driving mechanism 62 to press the laminate body 18 against the table 51 is set to be appropriate in smoothly moving the tubes 11 and the fins 12 pressed by the movable portion 57 of the laminate-direction compressing unit 55 toward the fixing portion 56. The driving force B of the driving mechanism 62 can be controlled based on a stroke amount required for the driving mechanism 62 to move the leveling plate 61 toward the table 51, instead of setting the driving force B for the driving mechanism 62. In this case, for example, the setting of the stroke amount is performed in such a way as to equalize the interval between the table 51 and the leveling plate 61 with the thickness of the laminate body 18.

As mentioned above, in the lamination process, the laminate body 18 is compressed in both the thickness direction and the laminate direction and can be placed at a predetermined position on the table 51 without being lifted off the table 51.

Next, the assembling apparatus 50 performs the main compression process for compressing the laminate body 18 until the tube pitch becomes equal to the above-mentioned predetermined interval (refer to FIGS. 3B, 4B, and 5B).

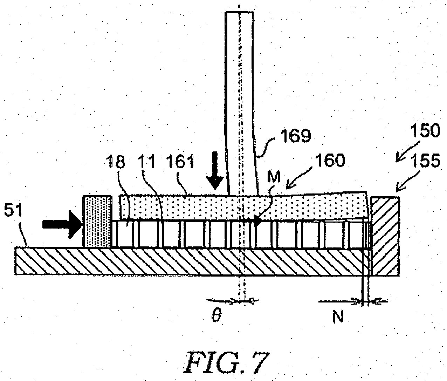

FIG. 7 is a configuration diagram illustrating an operation of an assembling apparatus 150 according to a comparative example. A thickness-direction compressing unit 160 of the assembling apparatus 150 does not have any holding portion and compresses the laminate body 18 by using only a leveling plate 161 in the thickness direction. When a laminate-direction compressing unit 155 compresses the laminate body 18 in the laminate direction, the thickness-direction compressing unit 160 is subjected to a frictional force M acting from the laminate body 18. When the frictional force M is large, the frictional force M deforms a guide rod 169 supporting the leveling plate 161 so as to be inclined by an angle *θ*, while the leveling plate 161 is displaced in the laminate direction by a distance N and inclines with respect to the table 51. Accordingly, if the orientation of the leveling plate 161 changes, undesirable positional deviation in which some of the tubes 11 are lifted off the table 51 may occur.

On the other hand, in the main compression process according to present embodiment, the driving mechanism 62 of the thickness-direction compressing unit 60 lowers the support base 65 toward the table 51 to cause the leveling plate 61 to press the laminate body 18 with a driving force E in the thickness direction (refer to FIG. 3B). On the other hand, each holding portion 63 moves upward away from the laminate body 18 as indicated by arrow F.

Further, in the main compression process, the laminate-direction compressing unit 55 compresses the laminate body 18 with a driving force D in the laminate direction to equalize the tube pitch with the above-mentioned predetermined interval (refer to FIG. 4B). The driving force D in the main compression process is set to be greater than the driving force A in the lamination process.

The driving force E required for the driving mechanism 62 to press the laminate body 18 against the table 51 is set to be greater than the driving force B in the lamination process and appropriate in smoothly moving the tubes 11 and the fins 12 pressed by the movable portion 57 of the laminate-direction compressing unit 55 toward the fixing portion 56. The driving force E of the driving mechanism 62 can be controlled based on a stroke amount required for the driving mechanism 62 to move the leveling plate 61 toward the table 51, instead of setting the driving force E of the driving mechanism 62. In this case, for example, the interval between the table 51 and the leveling plate 61 is set to be slightly smaller than the thickness of the laminate body 18.

In the main compression process, each holding portion 63 is separated from the laminate body 18 (refer to FIG. 5B) and the pressing force with which the holding portion 63 presses the laminate body 18 becomes zero. Therefore, when the laminate-direction compressing unit 55 compresses the laminate body 18 in the laminate direction, a frictional force C that the driving mechanism 62 of the thickness-direction compressing unit 60 receives from the laminate body 18 is suppressed to be smaller. As a result, the guide rod 69 supporting the leveling plate 61 or the like is suppressed from deflecting, and the orientation of the leveling plate 61 can be held to face the table 51 in parallel with each other. The orientation of the leveling plate 61 as mentioned above is maintained in the main compression process can prevent the positional deviation in which some of the tubes 11 are lifted off the table 51 can be prevented from occurring.

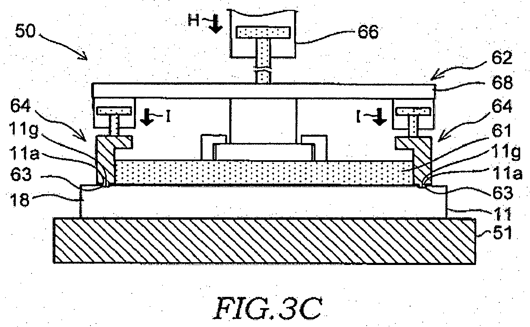

Next, the assembling process is performed for assembling the tank plates 23 and 24 with the laminate body 18 held on the table 51 (refer to FIGS. 3C, 4C, and 5C).

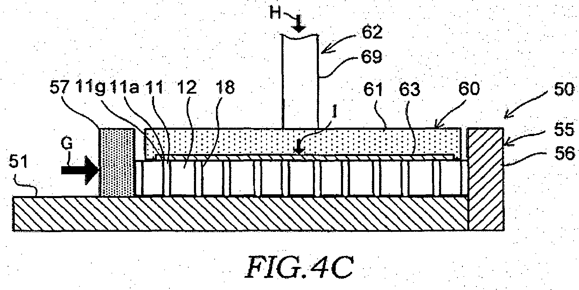

In the assembling process, the laminate-direction compressing unit 55 compresses the laminate body 18 with a driving force G in the laminate direction (refer to FIG. 4C), while the actuator 66 of the driving mechanism 62 presses the laminate body 18 by the leveling plate 61 with a driving force H in the thickness direction. In this state, the actuator 68 of the driving mechanism 64 presses the laminate body 18 by the holding portion 63 with a driving force I in the thickness direction (refer to FIG. 3C).

As illustrated in FIG. 5C, the surface 11b of the pressing portion 11g of the tube 11 curved into an arc shape is pressed by the holding portion 63 with driving force I and, as a result, the concave portion 11a is formed. The concave portion 11a has a pair of step portions 11c opposed to each other. Each step portion 11c extends in a direction (lateral direction) perpendicular to the longitudinal direction of the tube 11.

The driving force I required for the driving mechanism 64 to move the holding portion 63 is set to be appropriate such that the tube 11 pressed by the holding portion 63 deforms plastically and the concave portion 11a having a predetermined depth can be formed on the surface 11b of the pressing portion 11g of the tube 11. The load with which the holding portion 63 presses each tube 11 is set to be greater than the load with which the leveling plate 161 presses the laminate body 18 in the comparative example illustrated in FIG. 7. Further, the driving force I of the driving mechanism 64 can be controlled based on a stroke amount required for the driving mechanism 64 to move the holding portion 63 toward the table 51, instead of setting the driving force I of the driving mechanism 64. In this case, for example, the stroke amount is set performed in such a manner that the interval between the table 51 and the holding portion 63 becomes smaller than the thickness of the tube 11 by a predetermined amount. Setting the stroke amount as mentioned above, thereby the concave portion 11a having the predetermined depth is formed on the surface of the pressing portion 11g of the tube 11. The depth of the concave portion 11a can be changed by adjusting the load or the stroke amount required for the holding portion 63 to press each tube 11. Further, as described below, in the pressing portion 11g of the tube 11, it is feasible to prevent the surface 11b of the tube 11 from plastically deforming so as not to form the concave portion 11a.

As mentioned above, the tank assembling unit (not illustrated) is operated to assemble the tank plates 23 and 24 with the laminate body 18 in a state where the laminate body 18 is held on the table 51. In this case, the laminate body 18 is compressed by the laminate-direction compressing unit 55 and is restricted from moving in the laminate direction. Further, because the holding portion 63 is pressed against the concave portion 11a, each tube 11 is restricted from moving in both the thickness direction and the longitudinal direction of the tube 11. Thus, because each tube 11 is held at a predetermined position on the table 51, press-fitting the opening ends 11d of respective tubes 11 into the tube insertion holes 23a and 24a of the tank plates 23 and 24 can be accurately performed.

Subsequently, the heat treatment is performed to cause the cladding layers applied beforehand to the surfaces of the tubes 11, the fins 12, and the tank plates 23 and 24 to melt and braze the constituent components together, thereby forming the heat exchanger core 9. Subsequently, the tank bodies 25 and 26 are united with the tank plates 23 and 24 to complete the heat exchanger 10.

Next, effects of the present embodiment will be described in detail below.

The present embodiment provides the heat exchanger 10 including the pressing portion 11g for holding the tube 11 when the tanks 13 and 14 are connected in the vicinity of the opening end 11d of each tube 11.

Further, the present embodiment provides the assembling apparatus 50 that includes the table 51 on which respective tubes 11 are laminated, the laminate-direction compressing unit 55 configured to compress respective tubes 11 laminated on the table 51 in the laminate direction, and the thickness-direction compressing unit 60 configured to compress respective tubes 11 in the thickness direction perpendicular to the table 51. The thickness-direction compressing unit 60 includes the holding portion 63 configured to press the vicinity of the opening ends 11d of respective tubes 11, compressed in the laminate direction by the laminate-direction compressing unit 55, against the table 51. The holding portion 63 holds the plurality of tubes 11 when the tanks 13 and 14 are connected to respective tubes 11.

Further, the present embodiment provides the assembling method including the lamination process for laminating respective tubes 11, the main compression process for compressing respective tubes 11 in the laminate direction, and the assembling process for connecting the tanks 13 and 14 with respective tubes 11 in a state where the tubes 11 are held and pressed by the holding portion 63 for holding each tube 11 in the vicinity of the opening end 11d of respective tubes 11 compressed in the laminate direction.

The above-mentioned configuration can suppress the positional deviation from occurring in each laminated tube 11 because the holding portion 63 presses each tube 11 in the vicinity of the opening end 11d when the tanks 13 and 14 are connected to the laminated tubes 11. Therefore, the operation for assembling the tanks 13 and 14 with the laminated tubes 11 can be accurately performed. Accordingly, the tubes 11 and the tube insertion holes 23a and 24a of the tanks 13 and 14 can be prevented from being damaged. As a result, the brazing for joining the tubes 11 and the tube insertion holes 23a and 24a can be accomplished without causing any gap and the yield in the assembling operation of the heat exchanger 10 can be improved.

The present embodiment provides the heat exchanger 10 in which the pressing portion 11g includes the concave portion 11a recessed as the pressed mark on the surface 11b of the tube 11.

The above-mentioned configuration can suppress the positional deviation from occurring in each laminated tube 11 because the holding portion 63 presses and plastically deforms the surface 11b of each tube 11, and engages with the concave portion 11a which has been recessed by the pressing, when the tanks 13 and 14 are connected to the laminated tubes 11.

The present embodiment provides the heat exchanger 10 in which the pressing portions 11g are formed at positions apart from the tanks 13 and 14 by the predetermined distance L in the longitudinal direction of the tube 11.

The above-mentioned configuration can prevent the holding portion 63 pressed against the pressing portion 11g from interfering with the tanks 13 and 14 when the tanks 13 and 14 are assembled with the tubes 11. As a result, the operation for assembling the tanks 13 and 14 with the tubes 11 can be smoothly performed in a state where the holding portion 63 is pressed against the concave portion 11a.

The present embodiment provides the assembling apparatus 50 for the heat exchanger 10, in which the thickness-direction compressing unit 60 includes the leveling plate 61 aligned with the holding portion 63 and pressing respective tubes 11 against the table 11. The leveling plate 61 compresses each tube 11 in the thickness direction in a state where the holding portion 63 is separated from each tube 51.

The above-mentioned configuration can maintain the orientation of the leveling plate 61 when the laminate-direction compressing unit 55 compresses the laminate body 18 in the laminate direction, because the leveling plate 61 is in sliding contact with the laminate body 18 and the leveling plate 61 receives a smaller frictional force from the laminate body 18. Maintaining the orientation of the leveling plate 61 in the main compression process as mentioned above, the positional deviation in which some of the tubes 11 are lifted off the table 51 can be prevented from occurring.

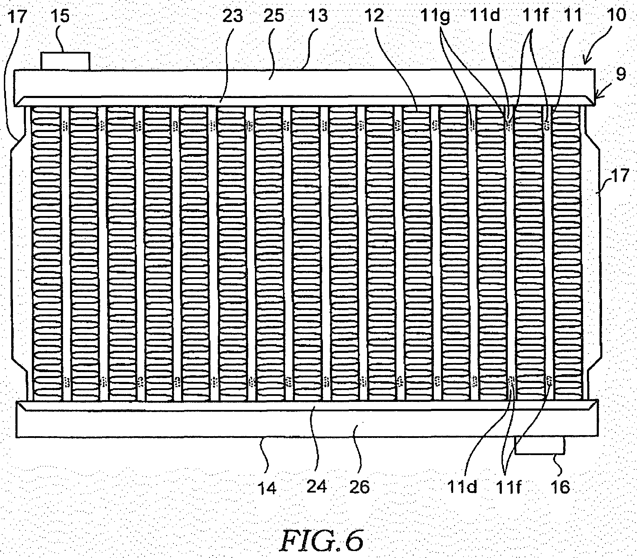

Next, a modified embodiment of the heat exchanger 10 will be described with reference to FIG. 6.

The pressing portion 11g has a pressed mark portion 11f, which is formed as a pressed mark to be formed on the surface of each tube 11.

In the assembling process, the load or the stroke amount required for pressing the holding portion 63 against each tube 51 is appropriately set so that each tube 11 can return to the original surface shape without causing any plastic deformation even when the surface is deflected by the pressing of the holding portion 63 (refer to FIGS. 3C and 4C). As a result, the pressing portion 11g of each tube 11 is formed with the pressed mark portion 11f whose surface roughness is partly variable without forming any concave portion by pressing the holding portion 63.

In the assembling process, the holding portion 63 presses the surface of each tube 11 when the tanks 13 and 14 are connected, and therefore it is feasible to suppress the positional deviation from occurring in respective tubes 11 laminated on the table 51. Therefore, the operation for assembling the tanks 13 and 14 with the laminated tubes 11 can be accurately performed.

However, the configuration is not limited to the above-mentioned example. The assembling process can be configured such that any pressed mark does not remain on the surface of each tube 11 by appropriately setting the load or the stroke amount required for the holding portion 63 to press each tube 11.

In the above-mentioned embodiment, the leveling plate 61 and the holding portion 63 are configured to move vertically with respect to the table 51 so as to press the laminate body 18. However, the configuration is not limited to the above-mentioned example. a rotating mechanism using a hinge is adoptable to press the laminate body 18 from an inclined direction.

Further, in the above-mentioned embodiment, the laminate body 18 is constituted such that the tubes 11 and the fins 12 are laminated. However, the configuration is not limited to the above-mentioned example. The laminate body 18 can be configured to include only the tubes to be laminated without fins.

## Claims

1. A heat exchanger (10) including a laminate body (18) constituted by a plurality of alternately laminated tubes (11) and fins (12), the laminated tubes (11) having an opening end (11d) to which a tank (13) is connected, wherein
the laminate body (18) includes a pressing portion (11g) provided in the vicinity of the opening end (11d) of each tube (11), the laminate body (18) being held by the pressing portion (11g) when the tank (13) is connected to the opening end (11d) of the tubes (11), and
the pressing portion (11g) is provided on the laminate body (18) at two portions apart from each other in a longitudinal direction of the tube (11), and **characterized in that**
the pressing portion (11g) includes a pressed mark to be formed on a surface of the tube (11),
wherein the pressed mark is a concave portion (11a) recessed on the surface of the tube (11).

2. The heat exchanger (10) according to claim 1, wherein the pressing portion (11g) is provided only on the tube (11).

3. The heat exchanger (10) according to claim 1 or 2, wherein the size of the fin (12) in a thickness direction is smaller than the size of the tube (11) in the thickness direction,
the fins (12) are disposed at positions offset toward one end of the tubes (11) in the thickness direction, and
the pressing portion (11g) is provided at the other end of the tubes (11) in the thickness direction.

4. The heat exchanger (10) according to claim 3, wherein the fins (12) and the one end of the tubes (11) are disposed on the same plane.

5. The heat exchanger (10) according to any one of claims 1 to 4, wherein the concave portion (11a) has a depth smaller than a difference between the size of the fin (12) in the thickness direction and the size of the tube (11) in the thickness direction.

6. The heat exchanger (10) according to any one of claims 1 to 5, wherein the pressing portion (11g) is formed at a position apart from the tank (13) in a longitudinal direction of the tube (11).

7. A heat exchanger assembling apparatus (50) for assembling a heat exchanger (10) including a laminate body (18) constituted by a plurality of alternately laminated tubes (11) and fins (12), the laminated tubes (11) having an opening end (11d) to which a tank (13) is connected, the assembling apparatus (50) comprising:
a table (51) on which respective tubes (11) and fins (12) are laminated;
a laminate-direction compressing unit (55) configured to compress the laminate body (18) laminated on the table (51) in a laminate direction; and
a thickness-direction compressing unit (60) configured to compress the laminate body (18) in a thickness direction perpendicular to the table (51), wherein
the thickness-direction compressing unit (60) includes a holding portion (63) configured to press the laminate body (18) in the vicinity of the opening end (11d) of the plurality of tubes (11), compressed in the laminate direction by the laminate-direction compressing unit (55), against the table (51), and
the holding portion (63) is configured to hold the laminate body (18) at two portions apart from each other in a longitudinal direction of the plurality of tubes (11) when the tank (13) is connected to the plurality of tubes (11), and **characterized in that**
the thickness-direction compressing unit (60) is configured to form pressed marks on surfaces of the plurality of tubes (11) with the holding portion (63),
wherein the pressed mark is a concave portion (11a) recessed on the surface of the tube (11).

8. The heat exchanger assembling apparatus (50) according to claim 7, wherein the holding portion (63) is configured to hold only the tubes (11).

9. The heat exchanger assembling apparatus (50) according to claim 7 or 8, wherein the size of the fin (12) in the thickness direction is smaller than the size of the tube (11) in the thickness direction,
the tubes (11) and the fins (12) are in contact with the table (51), and
the pressed marks are formed by the holding portion (63) at the other ends of the fins (12), which are on the opposite side of one ends of the fins (12) that are in contact with the table (51).

10. The heat exchanger assembling apparatus (50) according to claim 9, wherein the thickness-direction compressing unit (60) includes a leveling plate (61) aligned with the holding portion (63) and configured to press the plurality of tubes (11) against the table (51), and
the leveling plate (61) is configured to compress the plurality of tubes (11) in the thickness direction in a state where the holding portion (63) is separated from the plurality of tubes (11).

11. A heat exchanger assembling method for assembling a heat exchanger (10) including a laminate body (18) constituted by a plurality of alternately laminated tubes (11) and fins (12), the laminated tubes (11) having an opening end (11d) to which a tank (13) is connected, the method comprising:
a lamination process for laminating the plurality of tubes (11) and fines (12);
a main compression process for compressing the laminate body (18) in a laminate direction;
an assembling process for connecting the tank (13) to the plurality of tubes (11) in a state where the laminate body (18) are held and pressed at two portions apart from each other in a longitudinal direction of the plurality of tubes (11) by a holding portion (63) for holding the laminate body (18) in the vicinity of the opening end (11d) of the plurality of tubes (11) compressed in the laminate direction, **characterized in that**
the assembling process includes forming pressed marks on surfaces of the plurality of tubes (11) with the holding portion (63),
wherein the pressed mark is a concave portion (11a) recessed on the surface of the tube (11).

12. The heat exchanger assembling method according to claim 11, wherein the holding portion (63) holds only the tubes (11) in the assembling process.

13. The heat exchanger assembling method according to claim 11 or 12, wherein the size of the fin (12) in a thickness direction is smaller than the size of the tube (11) in the thickness direction,
the lamination process includes disposing the fins (12) at positions offset toward one ends of the tubes (11) in the thickness direction, and
the pressed marks are formed by the holding portion (63), in the assembling process, at the other ends of the tubes (11), which are on the opposite side of the one ends of the tubes (11) in the thickness direction.

## Patentansprüche

1. Wärmetauscher (10), der einen Schichtkörper (18) enthält, der durch eine Vielzahl abwechselnd geschichteter Röhren (11) und Rippen (12) gebildet wird, wobei die geschichteten Röhren ein offenes Ende (11d) haben, mit dem ein Behälter (13) verbunden ist, und
der Schichtkörper (18) einen Press-Abschnitt (11g) enthält, der sich in der Nähe des offenen Endes (11d) jeder Röhre (11) befindet, wobei der Schichtkörper (18) von dem Press-Abschnitt (11g) gehalten wird, wenn der Behälter (13) mit dem offenen Ende (11d) der Röhren (11) verbunden ist, und
der Press-Abschnitt (11g) sich an dem Schichtkörper (18) an zwei Abschnitten befindet, die voneinander in einer Längsrichtung der Röhre (11) getrennt sind, **dadurch gekennzeichnet, dass** der Press-Abschnitt (11g) eine an einer Oberfläche der Röhre (11) auszubildende Press-Markierung enthält,
wobei die Press-Markierung ein an der Oberfläche der Röhre (11) vertiefter konkaver Abschnitt (11a) ist.

2. Wärmetauscher (10) nach Anspruch 1, wobei der Press-Abschnitt (11g) nur an der Röhre (11) vorhanden ist.

3. Wärmetauscher (10) nach Anspruch 1 oder 2, wobei die Größe der Rippe (12) in einer Dicken-Richtung kleiner ist als die Größe der Röhre (11) in der Dicken-Richtung,
die Rippen (12) an Positionen angeordnet sind, die auf ein Ende der Röhre (11) in der Dicken-Richtung zu versetzt sind, und
der Press-Abschnitt (11g) sich an dem anderen Ende der Röhren (11) in der Dicken-Richtung befindet.

4. Wärmetauscher (10) nach Anspruch 3, wobei die Rippen (12) und das eine Ende der Röhren (11) in der gleichen Ebene angeordnet sind.

5. Wärmetauscher (10) nach einem der Ansprüche 1 bis 4, wobei der konkave Abschnitt (11a) eine Tiefe hat, die kleiner ist als eine Differenz zwischen der Größe der Rippe (12) in der Dicken-Richtung und der Größe der Röhre (11) in der Dicken-Richtung.

6. Wärmetauscher (10) nach einem der Ansprüche 1 bis 5, wobei der Press-Abschnitt (11g) an einer Position ausgebildet ist, die von dem Behälter (13) in einer Längsrichtung der Röhre (11) getrennt ist.

7. Vorrichtung (50) zum Montieren eines Wärmetauschers, mit der ein Wärmetauscher (10) montiert wird, der einen Schichtkörper (18) enthält, der durch eine Vielzahl abwechselnd geschichteter Röhren (11) und Rippen (12) gebildet wird, wobei die geschichteten Röhren (11) ein offenes Ende (11d) haben, mit dem ein Behälter (13) verbunden ist, und die Vorrichtung (50) zum Montieren umfasst:
einen Tisch (51), auf dem jeweilige Röhren (11) und Rippen (12) geschichtet werden;
eine Einheit (55) zum Zusammendrücken in Schichtungs-Richtung, die zum Zusammendrücken des auf dem Tisch (51) geschichteten Schichtkörpers (18) in einer Schichtungs-Richtung eingerichtet ist; sowie
eine Einheit (60) zum Zusammendrücken in Dicken-Richtung, die zum Zusammendrücken des Schichtkörpers (18) in einer Dicken-Richtung senkrecht zu dem Tisch (51) eingerichtet ist, wobei
die Einheit (60) zum Zusammendrücken in Dicken-Richtung einen Halte-Abschnitt (63) enthält, der so eingerichtet ist, dass er den in der Schichtungs-Richtung durch die Einheit (55) zum Zusammendrücken in Schichtungs-Richtung zusammengedrückten Schichtkörper (18) in der Nähe des offenen Endes (11d) der Vielzahl von Röhren (11) an den Tisch (51) presst, und
der Halte-Abschnitt (63) so eingerichtet ist, dass er den Schichtkörper (18) an zwei Abschnitten hält, die voneinander in einer Längsrichtung der Vielzahl von Röhren (11) getrennt sind, wenn der Behälter (13) mit der Vielzahl von Röhren (11) verbunden ist, **dadurch gekennzeichnet, dass**
die Einheit (60) zum Zusammendrücken in Dicken-Richtung so eingerichtet ist, dass sie Press-Markierungen an Oberflächen der Vielzahl von Röhren (11) mit dem Halte-Abschnitt (63) ausbildet,
wobei die Press-Markierung ein an der Oberfläche der Röhre (11) vertiefter konkaver Abschnitt (11a) ist.

8. Vorrichtung (50) zum Montieren eines Wärmetauschers nach Anspruch 7, wobei der Halte-Abschnitt (63) nur zum Halten der Röhren (11) eingerichtet ist.

9. Vorrichtung (50) zum Montieren eines Wärmetauschers nach Anspruch 7 oder 8, wobei die Größe der Rippe (12) in der Dicken-Richtung kleiner ist als die Größe der Röhre (11) in der Dicken-Richtung,
die Röhren (11) und die Rippen (12) in Kontakt mit dem Tisch (51) sind, und
die Press-Markierungen durch den Halte-Abschnitt (63) an den anderen Enden der Rippen (12) ausgebildet werden, die sich an der Seite befinden, die Enden der Rippen (12) gegenüberliegt, die in Kontakt mit dem Tisch (51) sind.

10. Vorrichtung (50) zum Montieren eines Wärmetauschers nach Anspruch 9, wobei die Einheit (60) zum Zusammendrücken in Dicken-Richtung eine Ausricht-Platte (61) enthält, die auf den Halte-Abschnitt (63) ausgerichtet und zum Pressen der Vielzahl von Röhren (11) an den Tisch (51) eingerichtet ist, und
die Ausricht-Platte (61) so eingerichtet ist, dass sie die Vielzahl von Röhren (11) in einem Zustand in der Dicken-Richtung zusammendrückt, in dem der Halte-Abschnitt (63) von der Vielzahl von Röhren (11) getrennt ist.

11. Verfahren zum Montieren eines Wärmetauschers, mit dem ein Wärmetauscher (10) montiert wird, der einen Schichtkörper (18) enthält, der durch eine Vielzahl abwechselnd geschichteter Röhren (11) und Rippen (12) gebildet wird, wobei die geschichteten Röhren (11) ein offenes Ende (11b) haben, mit dem ein Behälter (13) verbunden ist, und das Verfahren umfasst:
einen Schichtungs-Prozess zum Schichten der Vielzahl von Röhren (11) und Rippen (12);
einen Haupt-Zusammendrück-Prozess zum Zusammendrücken des Schichtkörpers (18) in einer Schichtungs-Richtung;
einen Zusammenbau-Prozess zum Verbinden des Behälters (13) mit der Vielzahl von Röhren (11) in einem Zustand, in dem der Schichtkörper (18) von einem Halte-Abschnitt (63) an zwei voneinander in einer Längsrichtung der Vielzahl von Röhren (11) getrennten Abschnitten gehalten und gepresst wird, um den Schichtkörper (18) in der Nähe des offenen Endes (11d) der Vielzahl von Röhren (11) in der Schichtungs-Richtung zusammengedrückt zu halten, **dadurch gekennzeichnet, dass**
der Zusammenbau-Prozess Ausbilden von Press-Markierungen an Oberflächen der Vielzahl von Röhren (11) mit dem Halte-Abschnitt (63) einschließt,
wobei die Press-Markierung ein an der Oberfläche der Röhre (11) vertiefter konkaver Abschnitt (11a) ist.

12. Verfahren zum Montieren eines Wärmetauschers nach Anspruch 11, wobei der Halte-Abschnitt (63) bei dem Zusammenbau-Prozess nur die Röhren (11) hält.

13. Verfahren zum Montieren eines Wärmetauschers nach Anspruch 11 oder 12, wobei die Größe der Rippe (12) in einer Dicken-Richtung kleiner ist als die Größe der Röhre (11) in der Dicken-Richtung,
der Schichtungs-Prozess einschließt, dass die Rippen (12) an Positionen angeordnet werden, die auf Enden der Röhren (11) in der Dicken-Richtung zu versetzt sind, und
die Press-Markierungen durch den Halte-Abschnitt (63) bei dem Zusammenbau-Prozess an den anderen Enden der Röhren (11) ausgebildet werden, die sich an der Seite befinden, die den einen Enden der Röhren (11) in der Dicken-Richtung gegenüberliegt.

## Revendications

1. Echangeur de chaleur (10) comprenant un corps stratifié (18) constitué d'une pluralité de tubes alternativement stratifiés (11) et d'ailettes (12), les tubes stratifiés (11) présentant une extrémité d'ouverture (11d) à laquelle un réservoir (13) est connecté, dans lequel
le corps stratifié (18) comprend une partie emboutissage (11g) prévue au voisinage de l'extrémité d'ouverture (11d) de chaque tube (11), le corps stratifié (18) étant maintenu par la partie emboutissage (11g) lorsque le réservoir (13) est relié à l'extrémité d'ouverture (11d) des tubes (11), et
la partie emboutissage (11g) est prévue sur le corps stratifié (18) en deux parties séparées l'une de l'autre dans une direction longitudinale du tube (11), et **caractérisé en ce que**
la partie emboutissage (11g) comprend une marque emboutie destinée à être formée sur une surface du tube (11),
où la marque emboutie est une partie concave (11a) en retrait sur la surface du tube (11).

2. Echangeur de chaleur (10) selon la revendication 1, dans lequel la partie emboutissage (11g) est prévue uniquement sur le tube (11).

3. Echangeur de chaleur (10) selon les revendications 1 ou 2, dans lequel la taille de l'ailette (12) dans le sens de l'épaisseur est inférieure à la taille du tube (11) dans le sens de l'épaisseur,
les ailettes (12) sont disposées dans des positions décalées vers une extrémité des tubes (11) dans la direction de l'épaisseur et
la partie emboutissage (11g) est prévue à l'autre extrémité des tubes (11) dans le sens de l'épaisseur.

4. Echangeur de chaleur (10) selon la revendication 3, dans lequel les ailettes (12) et l'une des extrémités des tubes (11) sont disposées sur le même plan.

5. Echangeur de chaleur (10) selon l'une quelconque des revendications 1 à 4, dans lequel la partie concave (11a) a une profondeur inférieure à la différence entre la taille de l'ailette (12) dans le sens de l'épaisseur et la taille de la tube (11) dans le sens de l'épaisseur.

6. Echangeur de chaleur (10) selon l'une quelconque des revendications 1 à 5, dans lequel la partie emboutissage (11g) est formée en une position éloignée du réservoir (13) dans une direction longitudinale du tube (11).

7. Appareil d'assemblage d'échangeur de chaleur (50) pour l'assemblage d'un échangeur de chaleur (10) comprenant un corps stratifié (18) constitué d'une pluralité de tubes (11) et d'ailettes (12) stratifiés alternativement, les tubes stratifiés (11) ayant une extrémité d'ouverture (11d) à laquelle un réservoir (13) est connecté, l'appareil d'assemblage (50) comprenant:
une table (51) sur laquelle sont stratifiés des tubes (11) et des ailettes (12) respectifs;
une unité de compression dans le sens du stratifié (55) configurée pour comprimer le corps stratifié (18) sur la table (51) dans une direction de stratifié; et
une unité de compression dans le sens de l'épaisseur (60) configurée pour comprimer le corps stratifié (18) dans une direction d'épaisseur perpendiculaire à la table (51), dans laquelle
l'unité de compression dans le sens de l'épaisseur (60) comprend une partie de retenue (63) configurée pour emboutir le corps stratifié (18) au voisinage de l'extrémité d'ouverture (11d) de la pluralité de tubes (11), comprimés dans la direction stratifiée par l'unité de compression dans le sens du stratifié (55), contre la table (51), et
la partie de retenue (63) est configurée pour maintenir le corps stratifié (18) en deux parties séparées l'une de l'autre dans une direction longitudinale de la pluralité de tubes (11) lorsque le réservoir (13) est connecté à la pluralité de tubes (11)) et **caractérisé en ce que**
l'unité de compression dans le sens de l'épaisseur (60) est configurée pour constituer des marques embouties sur les surfaces de la pluralité de tubes (11) avec la partie de retenue (63),
dans lequel la marque emboutie est une partie concave (11a) en retrait sur la surface du tube (11).

8. Appareil d'assemblage d'échangeur de chaleur (50) selon la revendication 7, dans lequel la partie de retenue (63) est prévue pour maintenir uniquement les tubes (11).

9. Appareil d'assemblage d'échangeur de chaleur (50) selon les revendications 7 ou 8, dans lequel la taille de l'ailette (12) dans le sens de l'épaisseur est inférieure à la taille du tube (11) dans le sens de l'épaisseur,
les tubes (11) et les ailettes (12) sont en contact avec la table (51), et
les marques embouties sont formées par la partie de retenue (63) aux autres extrémités des ailettes (12) situées du côté opposé à l'une des extrémités des ailettes (12) en contact avec la table (51).

10. Appareil d'assemblage d'échangeur de chaleur (50) selon la revendication 9, dans lequel l'unité de compression dans le sens de l'épaisseur (60) comprend une plaque de nivellement (61) alignée avec la partie de retenue (63) et configurée pour comprimer la pluralité de tubes (11) contre la table (51), et
la plaque de nivellement (61) est configurée pour comprimer la pluralité de tubes (11) dans le sens de l'épaisseur dans un état où la partie de retenue (63) est séparée de la pluralité de tubes (11).

11. Procédé d'assemblage d'échangeur de chaleur pour assembler un échangeur de chaleur (50) comprenant un corps stratifié (18) constitué d'une pluralité de tubes (11) et d'ailettes (12) stratifiés alternativement, les tubes stratifiés (11) ayant une extrémité d'ouverture (11d) à laquelle un réservoir (13) est connecté, le procédé comprenant les opérations suivantes:
un processus de stratification pour stratifier la pluralité de tubes (11) et de fines (12);
un processus de compression principal pour comprimer le corps stratifié (18) dans une direction de stratifié;
un processus d'assemblage pour connecter le réservoir (13) à la pluralité de tubes (11) dans un état dans lequel les corps stratifiés (18) sont maintenus et emboutis en deux parties éloignées l'une de l'autre dans une direction longitudinale de la pluralité de tubes (11) par une partie de retenue (63) destinée à maintenir le corps stratifié (18) au voisinage de l'extrémité d'ouverture (11d) de la pluralité de tubes (11) emboutis dans le sens du stratifié, **caractérisé en ce que**
le processus d'assemblage comprend la formation de marques embouties sur les surfaces de la pluralité de tubes (11) avec la partie de retenue (63),
dans lequel la marque emboutie est une partie concave (11a) en retrait sur la surface du tube (11).

12. Procédé d'assemblage d'échangeur de chaleur selon la revendication 11, dans lequel la partie de retenue (63) ne retient que les tubes (11) dans le processus d'assemblage.

13. Procédé d'assemblage d'échangeur de chaleur selon les revendications 11 ou 12, dans lequel la taille de l'ailette (12) dans le sens de l'épaisseur est inférieure à la taille du tube (11) dans le sens de l'épaisseur,
le processus de stratification comprend l'étape consistant à disposer les ailettes (12) dans des positions décalées vers l'une des extrémités des tubes (11) dans la direction de l'épaisseur, et
les marques embouties sont formées par la partie de retenue (63), lors du processus d'assemblage, aux autres extrémités des tubes (11), qui se trouvent du côté opposé à l'une des extrémités des tubes (11) dans le sens de l'épaisseur.
